# EUROPEAN PATENT APPLICATION

(11) **EP 0 897 142 A1**
(43) Date of publication of application: **17.02.1999**
(21) Application number: 98115160.8
(22) Date of filing: 12.08.1998
(51) Int. Cl.: G05D 23/19, F25D 29/00

(54) **Temperature control system in a refrigerating cabinet**

(30) Priority: 12.08.1997 IT TO970736
(71) Applicant: Merloni Elettrodomestici S.p.A., 60044 Fabriano (AN) (IT)
(72) Inventor: Cappelletti, Domenico, Matelica (MC) (IT)

(57) **Abstract**

A temperature control system in a multicompartment refrigerating cabinet, called refrigerating cabinet, comprising a first compartment for the storage of fresh food; a second compartment for the freezing and storage of food; a refrigerating circuit comprising a compressor, a first and a second evaporator arranged in said first and second compartments respectively, and a condenser; and a temperature control circuit. According to the present invention, the temperature control circuit (7,10) provides a first temperature sensor (T1) housed in the compartment for the storage of fresh food (2) and a second temperature sensor (T2) housed in the compartment for the freezing and storage of food (3), selecting means (8,11) to activate a sensor selected between said first temperature sensor (T1) and said second temperature sensor (T2) for control operation of the refrigeration circuit (4) through control means (C1, C2; C) contained in said temperature control circuit (7,10).

## Description

The present invention relates to a temperature control system in a multicompartment refrigerating cabinet, called refrigerating cabinet, comprising a first compartment for the storage of fresh food, a second compartment for the freezing and storage of food; a refrigerating circuit comprising a compressor, a first and a second evaporator arranged in said first and second compartments respectively, and a condenser; and a temperature control circuit.

Refrigerators of the above type are already known. They represent, in fact, the type of household appliance most probably used.

Both evaporators, housed in the first compartment (i.e. the cell for the storage of fresh food or the socalled "refrigerator") and in the second compartment ("freezer"), respectively, are arranged in series within the same refrigerating circuit, which is actuated by one compressor alone due to cost reasons.

Since both evaporators are connected in series between them, operation of the evaporator associated with the freezer is mainly driven by the operation of the evaporator associated with the "refrigerator" compartment. Thermostatic control, in fact, is exclusively referred to the temperature of the "refrigerator" compartment.

Such a thermostatic control is ensured by a standard electromechanical thermostat housed right in the "refrigerator" compartment, being usually provided with a knob for manual setting of desired temperature.

It is mainly for this reason, that a control system ensuring satisfactory operation under changing environment conditions for both the "refrigerator' compartment and "freezer" compartment has not been developed yet. On the contrary, the systems used so far are associated with several problems.

Since the "refrigerator" compartment is usually set at a temperature of 5°C, whilst the "freezer" compartment will maintain working conditions from -6 to -18°C according to its specific freezer type, a refrigerating cabinet is usually manufactured with the "freezer" compartment following the evolutions of the "refrigerator" compartment, i.e. under usual environmental conditions, in order to maintain a safety margin, the "freezer"compartment is kept at a temperature surely lower than the maximum admitted temperature for correct storage of food. As a result, electric energy consumption of the refrigerating cabinet will be higher with a consequent certain degree of uncertainty concerning the temperature value reached inside the "freezer" compartment will be existing. However, taking careto provide a temperature well below the maximum admitted temperature for the "freezer" compartment, should the refrigerating cabinet be housed in a rather cold environment, such as eg. a cellar, garage or unoccupied holiday house during wintertime, there will not be any need for the thermostat to start the compressor since the thermal exchange with the environment outside substantially tends to be balanced. This is to the detriment of maintaining the temperature in the "freezer" compartment, tending to raise up to a temperature close to the room temperature.

Finally, particular usage conditions for a refrigerating cabinet are available where the known control systems are particularly poor. For instance, we have such a condition when the use of the 'refrigerator' compartment is not required, such as when people leave the house for a long period of time, typical when a family leaves the house on holidays. Since storage of fresh food is no longer necessary, it is deemed advisable to cut down consumptions and let only the 'freezer' compartment perform efficiently.

However, according to the present state of the art this is not possible as the refrigerating cycle is driven by the thermostat in the 'refrigerator' compartment.

It is the object of the present invention to solve the above problems and provide an improved and better performing temperature control system in a multicompartment refrigerating cabinet compared to the solutions already known.

To this purpose, it is the main object of the present invention to provide a temperature control system in a multicompartment refrigerating cabinet allowing operation control also as a function of the freezer compartment.

A further purpose of the present invention is to provide a temperature control system in a multicompartment refrigerating cabinet capable of cutting down energy consumption under determined usage conditions.

A further purpose of the present invention is to provide a temperature control system in a multicompartment refrigerating cabinet to improve temperature control in the freezer compartment with respect to room temperature changes.

In order to reach such purposes it is the object of the present invention to provide a temperature control system in a multicompartment refrigerating cabinet incorporating the features of the annexed claims that are part of this description.

Further purposes, features and benefits of the present invention will become apparent from the following detailed description and annexed drawings, which are supplied by way of a non limiting example, wherein:
Fig. 1 shows schematically a temperature control system in a multicompartment refrigerating cabinet according to the present invention;
Fig. 2 shows schematically a temperature control system in a multicompartment refrigerating cabinet according to a second embodiment of the present invention.

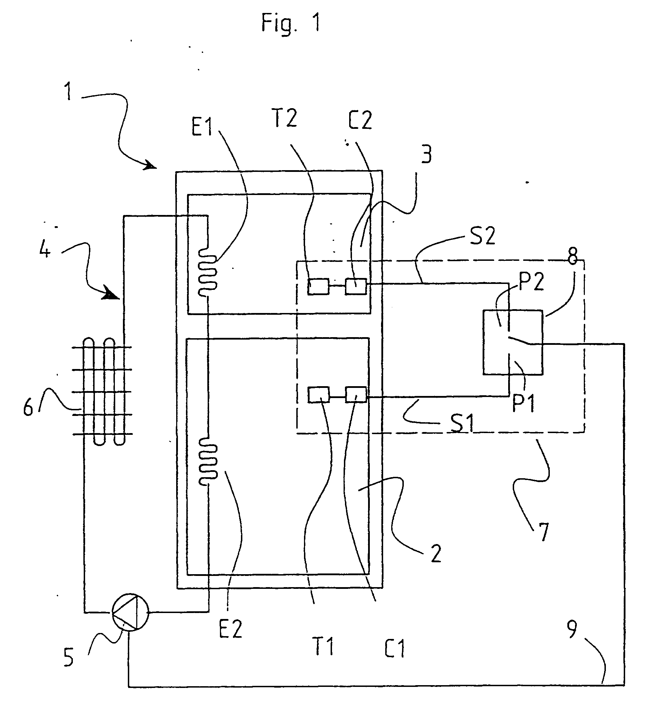

In Fig. 1 a refrigerating cabinet 1 with two compartments is shown, a compartment for the storage of fresh food 2 and a freezer compartment 3. The refrigerating cabinet 1 is equipped with only one refrigerating circuit 3, which consists of a compressor 5, a condenser 6, eg. a serpentine, a first evaporator E1 housed in the freezer compartment 3, a second evaporator E2 housed in the compartment for fresh food 2. The first evaporator E1 and the second evaporator E2 are connected in series within the refrigerating circuit 4 and supplied by the condenser 6, so that the refrigerating cycles both in the compartment for the storage of fresh food 2 and freezer compartment 3 are determined by the activation and disactivation of the sole compressor 5.

Thus, the refrigerating cabinet 1 is equipped with a temperature control circuit 7, fitted with a first temperature sensor T1 housed in the compartment for the storage of fresh food 2, providing indication of the compartment temperature for the storage of fresh food 2 to a first thermostat C1 also housed in the compartment for the storage of fresh fresh food 2. The first thermostat C1 is then connected with a signal line S1.

Similarly, the freezer compartment 3 has a second temperature sensor T2 sending the temperature value detected to a second thermostat C2, which is also housed in the freezer compartment 3. The second thermostat C2 is also connected with a signal line S2.

The signal line S1 and the signal line S2 converge to a switch 8, which may assume a position P1 to connect the signal line S1 with a control line 9 or, alternatively, a position P2 to connect the signal line S2 with the control line 9. The control line 9 drives either activation or disactivation of the compressor 5.

Operation is as follows: when the compartment for the storage of fresh food 2 either contains some food or to maintain a preset accurate average temperature, eg. 5°C, is anyway required inside it, the switch 8 is set on position P1 and will connect the signal line S1 with the control line 9. Consequently, on the basis of the values measured by the first temperature sensor T1, the first thermostat C1 is able to drive activation and disactivation cycles of the compressor 5 through the signal line S1 and the control line 9.

The second thermostat C2, with the corresponding second temperature sensor T2, remains disconnected, though operative.

When accurate temperature control is required inside the freezer compartment 3 or accurate temperature control in the compartment for the storage of fresh food 2 is irrelevant, the user may turn the switch 8 to position P2, where the second thermostat C2 and its associated second temperature sensor T2 are connected with the control line 9 and can drive activation and disactivation cycles of the compressor 5 according to the temperature trend inside the freezer compartment 3, whereas the first temperature sensor T1 and the first thermostat T2 will remain disconnected.

Thus the compartment for the storage of fresh food 2 will follow temperature evolutions of the freezer compartment 3. Therefore, under certain circumstances, such as in the instance of a low room temperature or of a refrigerating cabinet with an empty refrigerator compartment 2, the user can switch over to the freezer compartment 3 the refrigerator control associated with the compartment for the storage of fresh food 2.

The first temperature sensor T1 and the second temperature sensor T2, as well as the first thermostat C1 and the second thermostat C2 are provided in a known mode, i.e. typically through electromechanical thermostats, where the sensing element consists of a gas cartridge expanding and shrinking according to the temperature, thus causing a contact to be either closed or open.

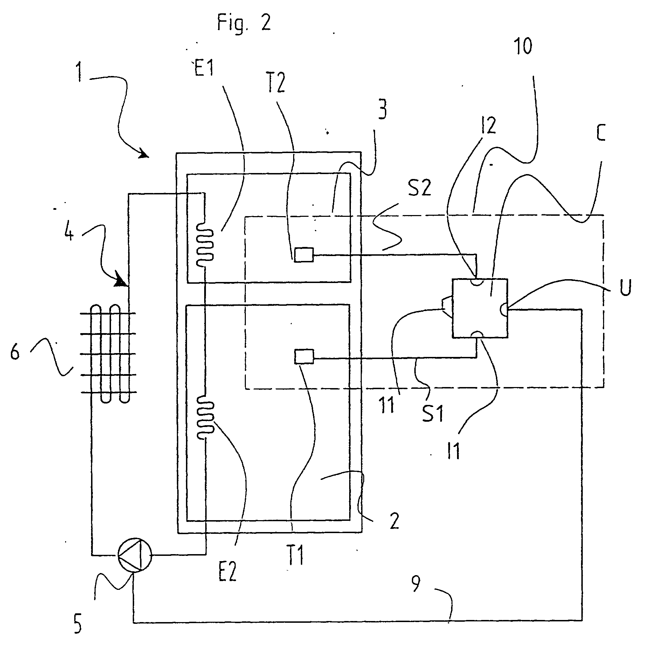

Fig. 2 shows a second embodiment of the present invention, with a different temperature control circuit 10, containing the first sensor T1 and the second sensor T2, which supply the temperature values measured on the input terminals I1, I2 of an electronic thermostat C through signal lines S1 and S2. Said electronic thermostat C also has an output terminal U connected with the control line 9 to drive compressor 5. A selector 11 on the electronic thermostat C allows to decide whether to use the temperature value supplied by the first temperature sensor T1 or the temperature value supplied by the second temperature sensor T2.

The temperature control circuit 10 also allows to add a further control function without any difficulties. As a matter of fact, when thermostatic control occurs related to the freezer compartment 3, there may be the risk for the compressor 5 to remain active during very long periods of time at a specifically high room temperature. As a result, temperature in the 'refrigerator' compartment may fall down to considerable low values, even below 0°C. This could possibly cause the contents of bottles not removed from the 'refrigerator compartment' as being scarcely subject to deterioration to become frozen as well as a problem of ice formation on the walls of the 'refrigerator' compartment. The first temperature sensor T1 remains anyway physically and electrically connected through the temperature control circuit 10 with the input terminal I1 of the electronic thermostat C, where the measured temperature is supplied to, even if the electronic thermostat C does not use it for compressor 5 management. However, the electronic thermostat may be programmed to activate an emergency procedure to hinder the compartment for the storage of fresh food to fall below 0°C, eg. raising the temperature of the 'refrigerator' compartment through activation of a suitable electric resistance.

According to the above description the features of the present invention as well as its benefits will be clear.

The temperature control system in a multicompartment refrigerating cabinet as described above by way of example advantageously allows thermostatic control associated at choice either with the temperature of the 'refrigerator' compartment or of the 'freezer' compartment. First of all, this involves the possibility of a more cost-efficient consumption rate, since selection of a thermostatic control related to the 'freezer' compartment will remove any useless cycles due to temperature changes in the 'refrigerator' compartment.

Specifically, thermostatic control related to the 'freezer' compartment may be chosen if temperature control of the 'refrigerator' compartment is certainly irrelevant, eg. emptying such a 'refrigerator' compartment any times the house is left for a more or less extended time, such as when leaving on holidays.

The temperature control system in a multicompartiment refrigerating cabinet according to the present invention is specifically advantageous in holiday houses, especially residential sites on the mountains, which are often unused for long periods of time, in which cases the 'refrigerator' compartment has to be completely emptied. In this instance it is normal practice to disconnect power supply from the refrigerating cabinet as a repeated compressor cycles sequence would make it to expensive to keep it live.

The refrigerator cabinet door has to be left open to avoid possible mildew formation inside the compartments. Selection of thermostatic control for the 'freezer' compartment, on the contrary, allows storage of long preservation food inside the 'freezer' compartment at much lower costs. Moreover, the number of refrigerating cycles assured by the thermostatic control for the 'freezer' compartment is enough to avoid mildew formation inside the 'refrigerator' compartment. Moreover, the temperature control system according to the present invention also allows to overcome the problem of a low room temperature in holidays houses on the mountains, as mentioned above, since when people are away the heating is usually off or set to a very low level.

Moreover, the temperature control system in a multicompartment refrigerating cabinet according to the present invention allows advantageous an exact temperature control inside the 'freezer' compartment to hinder a temperature raise, since the external temperature is too low with respect to the requirements of the 'freezer' compartment to request the required number of refrigerating cycles, but is enough to keep the desired temperature inside the 'freezer' compartment.

Obviously, many changes are possible for the man skilled in the art to the temperature control system in a multicompartment refrigerating cabinet described by way of example, without departing from the novelty spirit of the innovative solution, and it is also clear that in practical actuation of the invention the components may often differ in form and size from the ones described and be replaced with technical equivalent elements.

For instance, temperature sensors may be of any type available for the temperature field of refrigerating cabinets, and they may also be associated with or separated from the temperature control managing components.

The selector may be housed inside or located outside the refrigerating cabinet, have either the form of a push-button or knob selector and selection of thermostatic control may also occur by remote control and/or through a control unit separated from the refrigerating cabinet.

A possible embodiment of the present invention may have an electronic thermostat with a microprocessor and memory means, eg. programmed according to the known principles of the fuzzy logic, to allow automatic switchover of the thermostatic control according to the programs implemented by the manufacturing company, eg. a transfer of the operation control of the refrigerating circuit to the thermostat associated with the 'freezer' compartment once every n refrigeration cycles controlled by the thermostat associated with the refrigerator compartment, or according to a learning program of the user's habits.

## Claims

1. A temperature control system in a multicompartment refrigerating cabinet, said refrigerating cabinet, comprising a first compartment for the storage of fresh food; a second compartment for the freezing and storage of food; a refrigerating circuit comprising a compressor, a first and a second evaporator arranged in said first and second compartments respectively, and a condenser; and a temperature control circuit, characterized in that the temperature control circuit (7,10) comprises a first temperature sensor (T1) housed in the compartment for the storage of fresh food (2) and a second temperature sensor (T2) housed in the compartment for the freezing and storage of food (3), selecting means (8,11) to activate a sensor, selected between said first temperature sensor (T1) and said second temperature sensor (T2), that has to control operation of the refrigeration circuit (4) through control means (C1, C2; C) contained in said temperature control circuit (7,10).

2. A temperature control system in a multicompartment refrigerating cabinet according to claim 1, characterized in that selecting means (8,11) consist of a switch.

3. A temperature control system in a multicompartment refrigerating cabinet according to claim 2, characterized in that the switch (8) is a manual switch.

4. A temperature control system in a multicompartment refrigerating cabinet according to claim 3, characterized in that control means (C1, C2) are thermostatic control circuits.

5. A temperature control system in a multicompartment refrigerating cabinet according to claim 1, characterized in that selecting means (11) and control means (C) are enclosed in an electronic thermostat.

6. A temperature control system in a multicompartment refrigerating cabinet according to claim 5, characterized in that the electronic thermostat (C) is programmed to activate a procedure to raise temperature in the compartment for the storage of fresh food (2) should the temperature in the compartment for the storage of fresh food (2) fall below a preset value.

7. A temperature control system in a multicompartment refrigerating cabinet according to claim 6, characterized in that the electronic thermostat (C) activates a heating element to raise temperature in the compartment for the storage of fresh food (2) should the temperature in the compartment for the storage of fresh food n (2) fall below a preset value.

8. A temperature control system in a multicompartment refrigerating cabinet according to claim 6, characterized in that the electronic thermostat (C) has a microprocessor and memory means to perform preset control programs of the thermostatic control.

9. A temperature control system in a multicompartment refrigerating cabinet according to claim 8, characterized in that the preset control programs of the thermostatic control provide a switchover from the first temperature sensor (T1) to the second temperature sensor (T2) every n cycles.

10. A temperature control method in a multicompartment refrigerating cabinet comprising a first compartment for the storage of fresh food; a second compartment for the freezing and storage of food; a refrigerating circuit comprising a compressor, a first and a second evaporator arranged in said first and second compartments respectively, and a condenser; and a temperature control circuit, wherein when temperature control is considered a prominent condition in one of the two compartments (2,3) by the user, he activates thermostatic control related to the temperature of the chosen compartment (2,3) through actuation of a proper switch (8,11), which activates thermostatic control related to the temperature value supplied by a temperature sensor (T1,T2) housed in the compartment (2,3) chosen by the user.

11. A temperature control method in a multicompartment refrigerating cabinet according to claim 10, wherein if the temperature in one of the compartments (2,3) falls below a preset value, means (C) are provided in the temperature control circuit (7,10) to start a temperature raising procedure in said compartment.

12. A temperature control method in a multicompartment refrigerating cabinet according to claim 10, wherein if the temperature in one of the compartments (2,3) falls below a preset value, means (C) are provided in the temperature control circuit (7,10) to start a temperature raising procedure in said compartment.

13. A temperature control method in a multicompartment refrigerating cabinet according to claim 10, characterized in that switchover from the first temperature sensor (T1) to the second temperature sensor (T2) occurs automatically based on a managing program of the refrigerating cabinet.
